Europäisches Patentamt

European Patent Office

Office européen des brevets

(19)

(11) Publication number : **0 669 152 A1**

(12) **EUROPEAN PATENT APPLICATION**

(21) Application number : 95300834.9

(22) Date of filing : 10.02.95

(51) Int. Cl.⁶ : **B01D 17/022**, C08F 20/56, B01J 20/26, B01D 17/02

(30) Priority : 10.02.94 JP 16703/94

(43) Date of publication of application :
30.08.95 Bulletin 95/35

(84) Designated Contracting States :
DE FR GB IT

(71) Applicant : NIPPON SHOKUBAI CO., LTD.
1-1, Koraibashi, 4-chome
Chuo-ku, Osaka-shi, Osaka-fu 541 (JP)

(72) Inventor : Kadonaga, Kenji
5-1-203 Niahi-machi
Takatsuki-shi, Osaka-fu 569 (JP)

Inventor : Sakamoto, Shigeru
4-52 Nakanoshima-cho
Suita-shi, Osaka-fu 564 (JP)
Inventor : Miyake, Koji
Hamadasyataku G-402,
931-11 Hamada,
Aboshi-ku
Himeji-shi, Hyogo-ken 671-12 (JP)
Inventor : Harada, Nobuyuki
41-3-1007 Yamadahigashi 4-chome
Suita-shi, Osaka-fu 565 (JP)

(74) Representative : Rees, David Christopher et al
Kilburn & Strode
30 John Street
London WC1N 2DD (GB)

(54) **Method for the removal of water in oil.**

(57)    A method for the removal of water in oil which can avoid polluting the oil under treatment and permit a protracted continuous use, treatment inducing no corrosion in the pipes and the vessels is proposed.
    It is a method for the removal of water in oil, which comprises contacting a water-absorbent polymer sheet with an oil containing water then removing water from the oil, wherein said water-absorbent polymer sheet comprises a water-absorbent polymer produced by the polymerization of a monomer containing a water-soluble nonionically unsaturated monomer and a hydrophobic fibrous substrate having said water-absorbent polymer directly deposited fast thereon.

EP 0 669 152 A1

This invention relates to a method for the removal of water in oil. It relates more particularly to a method for the removal of the water in oil, in which a water-absorbent polymer sheet having very scant possibility of shedding swelled polymer particles, avoiding polluting the oil under treatment, and possessing the ability to prevent pipes, vessels, or similar machines from corrosion is contacted with a water-containing oil.

In recent years, for the purpose of preventing an absorbent sheet from accidentally shedding polymer particles swelled with water and improving the ease of handling of the absorbent polymer, there have been developed absorbent sheets which are produced by causing a monomer such as an acrylate which, when polymerized, forms an absorbent polymer to be polymerized on such a fibrous substrate as a non-woven fabric and which, therefore, have the absorbent polymer directly deposited fast on the fibrous substrate (JP-A-60-149,609 and JP-A-61-275,355). It has been proposed to apply these sheets to such sanitary materials as disposable diapers and napkins, to products of the food industry, or to articles which are required to be prevented from forming dew. A dewatering sheet for the removal of water in oil which is produced by causing acrylic acid to polymerize on a fibrous sheet by dint of an electron beam and which, therefore, is formed of an absorbent sheet having an absorbent polymer deposited fast on the fibrous sheet has been proposed (JP-A-01-215,344).

These absorbent sheets are easy to handle and are fairly capable of precluding the otherwise possible exfoliation of absorbent polymer. When they are used as dewatering filters for the removal of water in oil, for example, they do not provide ample prevention of the polymer exfoliation because the swelled gel of the absorbent polymer is liable to peel off under the force of the passing liquid. For this reason, they have the problem that the gel of exfoliated absorbent polymer is easy to pollute the oil. Further, they withstand protracted use only with difficulty because the swelled absorbent polymer induces the clogging of pores in the sheet. In cases where the pipes and the vessels which are exposed to these dewatering sheet are made of a metal, their portions in direct contact with the sheets are caused by the exfoliated polymer to gather rust. Thus, these sheets have the problem that the pipes and the vessels are easily corroded and consequently bored. Besides, the rust which occurs hence forces the absorbent polymer to contract or deteriorate, with the result that the water once removed by dewatering is suffered to return to the oil.

An object of this invention, therefore, is to provide a novel method for the removal of water in oil.

Another object of this invention is to provide a method for the removal of water in oil, in which the method can avoid polluting the oil under treatment and permit a protracted continuous use, treatment inducing no corrosion in the pipes and the vessels.

The present inventors, after a diligent study pursued with a view to solving the problems mentioned above, have learnt that when a water-absorbent polymer sheet which is produced by polymerizing a monomer comprising component monomers at a specific ratio on a hydrophobic fibrous substrate is used as a dewatering sheet for the removal of water in oil, the produced sheet of a water-absorbent polymer possesses elasticity and the polymer in a state swelled with water incurs strain only sparingly and exfoliates from the substrate to a notably small extent, absorbs water at a suitably controlled rate, entails no easy clogging of the pores therein and, even when left standing in the hydrated state in the presence of a metal, avoids forcing the metal to gather rust. This invention has been perfected as a result.

The objects mentioned above are accomplished by a method for the removal of water in oil, which comprises contacting a water-absorbent polymer sheet with oil containing water then removing water from the oil, wherein the water-absorbent polymer sheet comprises a water-absorbent polymer produced by the polymerization of a monomer containing a water-soluble nonionically unsaturated monomer and a hydrophobic fibrous substrate having the water-absorbent polymer directly deposited fast thereon.

This invention also concerns the method for the removal of water in oil, wherein the water-absorbent polymer is directly deposited on a hydrophobic fibros substrate by polymerizing on the substrate a monomer containing water-soluble nonionically unsaturated monomer. This invention also concerns the method for the removal of water in oil, wherein the water-soluble nonionically unsaturated monomer is at least one member selected from the group consisting of acrylamide, methacrylamide, methoxy polyalkylene glycol (meth)acrylates, and hydroxy alkyl(meth)acrylates. This invention also concerns the method for removal of water in oil, wherein the monomer contains a water-soluble anionically unsaturated monomer. This invention also concerns the method for the removal of water in oil, wherein the water-soluble anionically unsaturated monomer is at least one member selected from the group consisting of acrylic acid, methacrylic acid, 2-(meth)acrylamide-2-methylpropanesulfonic acids, (meth)acryloylalkanesulfonic acids, and alkali metal salts or ammonium salts thereof. This invention also concerns the method for the removal of water in oil, wherein the fibrous substrate contains fibers manifesting an advancing contact angle of 50° to 100 ° against water.

The objects mentioned above are also accomplished by a water-absorbent polymer sheet comprising a water-absorbent polymer produced by the polymerization of a monomer containing from 96 to 99.9 mol% of a water-soluble nonionically unsaturated monomer and from 0.1 to 4 mol% of a water-soluble anionically unsaturated monomer and a hydrophobic fibrous substrate having said water-absorbent polymer directly deposited

EP 0 669 152 A1

fast thereon.

The objects mentioned above are also accomplished by a method for the production of a water-absorbent polymer sheet, which method is characterized by first applying the aqueous solution of a monomer containing from 96 to 99.9 mol% of a water-soluble nonionically unsaturated monomer and from 0.1 to 4 mol% of a water-soluble anionically unsaturated monomer to a hydrophobic substrate and then polymerizing said monomer.

The objects mentioned above are accomplished by a dewatering sheet for the removal of water in oil having an absorbent polymer directly deposited fast on a hydrophobic fibrous substrate, which dewatering sheet suffers the absorbent polymer, when swelled with purified water, to exfoliate from the substrate at a ratio of not more than 8% by weight and suffers the hydrated sheet, when left standing in oil in the presence of a steel material, to generate rust on the surface of the steel material at an area ratio of not more than 1%.

According to the method for the removal of water in oil of this invention, an exfoliation ratio of the polymer from the substrate at a notably low ratio, so the pollution of the oil by the exfoliated polymer and corrosion of pipe or vessel are low. Since the method allows the water in oil to be removed very efficiently, it can prevent the vessel and the device exposed to the oil from gathering rust.

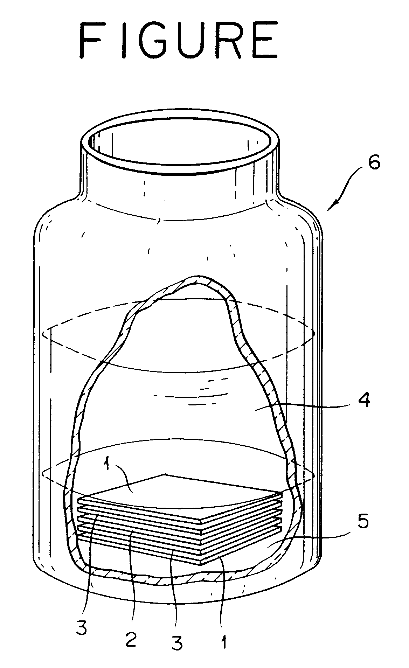

Fig. 1 is a partially cutaway perspective view schematically illustrating a vial having a dewatering sheet of this invention for the removal of water in oil held in the hydrated state in gasoline in conjunction with metal sheets and allowing an attendant to observe the condition of formation of rust on the surfaces of the metal sheets.

The hydrophobic fibrous substrate of this invention having an absorbent polymer directly deposited fast thereon is a fibrous sheet such as woven fabric, non-woven fabric, paper, or knit fabric. A non-woven fabric which is made of a varying fibrous web is advantageously used for the fibrous substrate. Owing to the use of this hydrophobic fibrous substrate, the water-absorbent polymer sheet for the removal of water in oil attains ready contact with the oil containing water and accomplishes efficiently the removal of the water from the oil. For example, the fibers to be used effectively in this invention are hydrophobic fibers composed of a resin which manifest an advancing contact angle of 50° to 100° against water, preferably 60° to 95°. As typical examples of the hydrophobic fibers which answer this description, the fibers of polyester, polyacrylonitrile, nylon, polyethylene, polypropylene, and polyvinyl chloride may be cited. These polymers may be used either singly or in the form of a combination of two or more members. The hydrophobic fibrous substrate of this invention comprises fibers which contain not less than 50% of hydrophobic fibers.

The non-woven fabric mentioned above, when the water absorbent polymer sheet of this invention is used for the purpose of dewatering an oil containing water, is preferable to be a fabric other than the non-woven fabric obtained by the resin bond method which, in constructing a non-woven fabric by causing component fibers to be interlaced and massed in the form of a web, uses an adhesive resin formed of a varying oil-soluble resin emulsion. If the non-woven fabric produced by the resin bond method which effects the interlacing of component fibers by the use of the oil-soluble adhesive resin is used as the fibrous substrate under discussion, the possibility arises that the adhesive resin will dissolve out and pass into the oil as an extraneous matter and, moreover, the sheet will be broken asunder. The other methods which are available for the production of a non-woven fabric instead of the resin bond method include the needle punch method, the stitch bond method, the thermal bond method, the spun lace method, the water jet method, the wet method, the melt blow method, and the spun bond method, for example.

Though the thickness of the fibrous substrate to be used in this invention has no particular restriction, it is generally in the range of from 0.01 to 10 mm, preferably from 0.1 to 5 mm. The non-woven fabric is desired to have a basis weight in the range of from 5 to 500 g/m², preferably from 10 to 200 g/m².

The water-absorbent polymer sheet of this invention for the removal of water in oil is obtained by applying to the substrate mentioned above the aqueous solution of a monomer having a water-soluble nonionically unsaturated monomer as a main component thereof or the aqueous solution of a water-soluble polymer of a molecular weight of not less than 10,000 obtained by polymerizing the monomer mentioned above and subsequently polymerizing and/or cross-linking the applied layer of the aqueous solution by the well-known technique thereby converting the aqueous solution into an absorbent polymer. From the viewpoint of such qualities of the produced dewatering sheet for the removal of water in oil as durability, exfoliation of polymer, clogging of pores in the sheet, and the formation of rust, the sheet which is obtained by applying to a fibrous substrate the aqueous solution of a monomer having a water-soluble nonionically unsaturated monomer as a main component thereof in the presence of a cross-linking agent and subsequently polymerizing the applied layer of the aqueous solution as deposited on the substrate proves to be preferable.

The monomer which has a water-soluble nonionically unsaturated monomer as a main component thereof is a monomer which contains not less than 50 mol% of a water-soluble nonionically unsaturated monomer, preferably a monomer which comprises from 94 to 99.9 mol% of a water-soluble nonionically unsaturated monomer and 0.1 to 6 mol% of a water-soluble unsaturated monomer, and more preferably a monomer which com-

3

prises from 96 to 99.9 mol% of a water-soluble nonionically unsaturated monomer and 0.1 to 4 mol% 3 of a water-soluble unsaturated monomer. If the proportion of the water-soluble nonionically unsaturated monomer is less than 50 mol%, the produced sheet in a swelled state will easily shed the polymer particles and will easily gather rust. Conversely, if the proportion of the water-i soluble nonionically unsaturated monomer exceeds 99.9 mol%, the disadvantage will ensue that the produced sheet suffers from a reduction in absorption capacity and the consumption of the dewatering sheet increases.

As typical examples of the water-soluble nonionically unsaturated monomer to be effectively used in this invention, acrylamide, methacrylamide, methoxy polyalkylene glycol (meth)acrylates, and hydroxy alkyl-(meth)-acrylates may be cited. These monomers may be used either singly or in the form of a combination of two or more members. From the viewpoint of the polymerizability of the monomer and the absorbency of the produced water-absorbent polymer sheet, acrylamide or methacrylamide is used particularly advantageously among other monomers cited above.

The water-soluble anionically unsaturated monomers which are usable for this invention include the monomers which contain a carboxyl group, a sulfonic acid group, or a phosphoric acid group. As typical examples of the monomers which answer this description, acrylic acid, methacrylic acid, maleic acid, vinyl sulfonic acid, 2-(meth)acrylamide-2-methyl-propanesulfonic acids, (meth)acryloylethanesulfonic acids, (meth)acryloylpropane-sulfonic acids, vinyl phosphonic acid, and sodium, potassium, lithium, and similar alkali metal salts or ammonium salts thereof may be cited. Among other water-soluble anionically unsaturated monomers cited above, (meth)acrylic acids, 2-(meth)acrylamide-2-methyl-propanesulfonic acid, (meth)acryloylethanesulfonic acid, and alkali metal salts or ammonium salts thereof prove to be particularly desirable from the viewpoint of the reactivity of the monomer and the absorbency of the produced dewatering sheet for the removal of water in oil. The best choices are acrylic acid and alkali metal salts or ammonium salt thereof.

When the monomer having the water-soluble nonionically unsaturated monomer mentioned above as a main component thereof is applied to the substrate and then polymerized thereon, the polymerization of the applied layer of the monomer is preferably to be carried out in the presence of a cross-linking agent. The use of the crosslinking agent enables the produced water-absorbent polymer sheet for the removal of water in oil to acquire improved durability and precludes the otherwise possibility that the absorbent polymer swelled with water will be deteriorated and forced to produce rust on the pipe and the device. The cross-linking agents which are effectively usable for this purpose in this invention include compounds which have two or more ethylenically unsaturated double bonds in the molecular unit thereof and compounds which have two or more functional groups capable of reacting with a carboxyl group or a sulfonic acid group in the molecular unit thereof, for example. As typical examples of the former compounds, N,N'-methylenebis(meth)acrylamide, (poly)-ethylene glycol di(meth)acrylates, and trimethylolpropane tri(meth)acrylates may be cited. As typical examples of the latter compounds, (poly)ethylene glycol diepoxides, (poly)-ethylene glycols, ethylene diamine, and polyethylene imine may be cited. The amount of the cross-linking agent to be used is generally in the range of from 0.001 to 10 mol%, preferably from 0.01 to 5 mol%, based on the amount of the monomer having a water-soluble nonionically unsaturated monomer as a main component thereof.

After the monomer having a water-soluble nonionically unsaturated monomer as a main component thereof has been applied to a substrate, the applied layer of the monomer on the substrate is polymerized by any of the known methods such as, for example, the thermal polymerization of the monomer which is effected in the presence of an initiator and the polymerization of the monomer which is attained by the irradiation of the monomer with such an active energy radiation as the electron beam or the $\gamma$ ray. After the water-soluble polymer obtained by polymerizing a monomer having a water-soluble nonionically unsaturated monomer has been applied to a substrate, the applied layer of the polymer is cross-linked by various known methods such as, for example, the irradiation of the polymer with the aforementioned active energy radiation, the application of heat to the polymer in the presence of such a radical generating agent as sodium persulfate, and the reaction of the polymer with a compound containing two or more functional groups capable of reacting with the functional group of a water-soluble nonionically unsaturated monomer or a water-soluble anionic monomer in the molecular unit thereof.

In the water-absorbent polymer sheet which has been obtained as described above, since the absorbent polymer is directly deposited fast on the fibrous substrate through no medium of any such a binder as adhesive agent, it never incurs any hindrance to the absorbency of its own. Thus, the possibility of the dewatering sheet shedding the polymer owing to the solution of a binder is nil. The absorbent polymer which is produced by depositing a monomer having a water-soluble nonionically unsaturated monomer as a main component thereof on a substrate and polymerizing the deposited layer of the monomer possesses elasticity and incurs strain only sparingly in the swelled state. This absorbent polymer, when kept in a swelled state in purified water, showed a decisively low ratio of exfoliation as compared with the sheet of the polymer which is obtained by depositing a monomer having an acrylate as a main component thereof on a substrate and polymerizing the deposited monomer. As a result, the absorbent polymer discharges highly advantageously the role of dewatering the oil containing water because the possibility of the polymer exfoliating from the substrate during the process of dewatering the oil containing water, mingling into the oil, and consequently inducing an increase of the water content of the oil is eliminated. Since this absorbent polymer absorbs water at a suitably controlled rate, the sheet of the absorbent polymer does not easily entail the clogging of the pores therein as compared with the sheet having a polyacrylate deposited fast thereon. Since this sheet is utilized throughout the entire area thereof, it is used highly advantageously as a filter, for example. Even in cases where the vessel and the pipes which are exposed to the oil under treatment are made of a steel material, therefore, the sheet of the absorbent polymer of this invention, when left standing in a hydrated state in the presence of the steel material, poses no markedly serious problem because it causes the steel material to gather rust only at a notably small area ratio of 1% or less as compared with the sheet of the polymer which is obtained by the polymerization of an acrylate and, therefore, disposed to induce the formation of rust on the steel material and compelled by the rust to undergo contraction and expulsion of the absorbed water. Further, since the absorbent polymer produced by polymerizing on a substrate a monomer having a water-soluble nonionically unsaturated monomer as a main component thereof excels also in resistance to salts, it will not suffer the absorbency of its own to be impaired by an additive containing zinc and tin, for example, and incorporated as in a lubricant.

The amount of the absorbent polymer contained together with the substrate in the water-absorbent polymer sheet is generally in the range of from 0.1 to 5 parts by weight, preferably from 0.2 to 2 parts by weight, based on 1 part by weight of the substrate. If the amount of the absorbent polymer is less than 0.1 part by weight, the dewatering sheet will be deficient in absorbency and will no longer fit the purpose of dewatering. Conversely, if this amount exceeds 5 parts by weight, the water-absorbent polymer sheet will suffer the pores therein to be clogged and will no longer fit for the purpose of dewatering. The absorption capacity of the sheet for purified water is generally not less than 5 times, preferably from 20 to 50 times, its own volume. If the absorption capacity is less than 20 times the volume, the dewatering sheet will remove only an insufficient amount of water from the oil and consequently prove uneconomical. Conversely, if the absorption capacity exceeds 50 times the volume, the dewatering sheet will easily shed polymer particles while in service.

The dewatering sheet of this invention for the removal of water in oil is such in quality that the ratio of the exfoliation in purified water of the absorbent polymer in a swelled state from the substrate is not more than 8% by weight and the area ratio of the rust generated on the surface of the steel material left standing in the oil together with the hydrated sheet is not more than 1%. Preferably, the ratio of the exfoliation of the absorbent polymer is not more than 5% and the area ratio of the formation of the rust is not more than 0.5%. If the ratio of the exfoliation of the absorbent polymer in the swelled state exceeds 8% by weight, the dewatering sheet will suffer the pores formed therein to be clogged with the exfoliated polymer and only part of the sheet will be available for the absorption of water and the remainder thereof will remain useless. The gel of the exfoliated polymer will pollute the oil and compel the dewatering sheet to expel the absorbed water into the oil. If the area ratio of the formation of rust exceeds 1%, the rust will pollute the oil, deteriorate the absorbent polymer, and compel the swelled polymer to contract and expel the absorbed water, with the result that the water expelled from the polymer corrodes the pipes and the vessel.

This invention attains the removal of water from a water-containing oil by causing the oil to contact the aforementioned dewatering sheet for the removal of water in oil. This dewatering sheet for the removal of water in oil can be used effectively by itself. Optionally, this sheet may be wrapped round a cylindrical tube provided in the lateral wall thereof with holes and utilized as a dewatering member for passing the water-containing oil mentioned above and consequently removing the water from this oil. Otherwise, the sheet may be covered with a water-pervious substrate and, as a dewatering member, immersed in the water-containing oil to remove the water from the oil.

(1) The polymer obtained by polymerizing on a substrate a monomer having a water-soluble nonionically unsaturated monomer possesses elasticity. As a result, the polymer in a swelled state incurs strain only sparingly and exfoliates from the substrate only to a markedly small degree as compared with the polymer obtained by polymerizing an acrylate.

(2) Since the absorbent polymer directly deposited fast on a substrate is the polymer produced by the polymerization of a monomer having a water-soluble nonionically unsaturated monomer, it absorbs water at a suitably controlled rate. When the dewatering sheet of this absorbent polymer is used for the removal of water in oil, it can be utilized in its entire area for the removal of water because it suffers the pores formed therein to be clogged only sparingly.

(3) The absorbent polymer results from the polymerization on a substrate of a monomer which has as its main component a water-soluble nonionically unsaturated monomer. This polymer, when placed in contact with a metal material, avoids inducing the metal material to gather rust thereon.

(4) The polymer obtained by polymerizing on a substrate a monomer having a water-soluble nonionically unsaturated monomer offer highly advantageous resistance to salts. Even in the oil which incorporates therein an additive containing metal ions, therefore, this polymer attains the removal of water highly satisfactorily.

(5) The absorbent polymer is directly deposited fast on a substrate through no medium of any binder. When the dewatering sheet of this absorbent polymer is used for the purpose of dewatering a water-containing oil, therefore, the oil is safe from the pollution with a binder and the absorbent polymer incurs no hindrance to the absorbency thereof.

(6) Since the ratio of exfoliation of the absorbent polymer in purified water is not more than 8%, the possibility of the swelled gel of the exfoliated absorbent polymer clogging the pores in the dewatering sheet or polluting the oil under treatment is eliminated. Further, the possibility of the dewatering sheet expelling the absorbed water into the oil is nil. The possible corrosion of the pipes and the vessel by the swelled gel of the exfoliated polymer can be precluded.

(7) Even when the absorbent polymer in a hydrated state is left standing in the oil in the presence of a steel material, the ratio of the formation of rust on the surface of the steel material is not more than 1%. Thus, the possibility of the formed rust deteriorating the absorbent polymer is nil. As a result, the possibility that the water removed once by absorption will be expelled from the absorbent polymer into the oil to the extent of aggravating the formation of rust and inducing the steel material to undergo further corrosion is eliminated. The pollution of the oil is prevented as well.

The method for the removal of water in oil of this invention, therefore, can be advantageously utilized as a method for removal of water for lubricants used in various machines, hydraulic oils, engine oils, transformer oils, insulating oils, gasoline, gas oil, kerosene, and various solvents employed for dry cleaning. Owing to the removal of water from the oil containing water, the vessels and the devices containing oil can be prevented from gathering rust.

Now, this invention will be explained more specifically below with reference to working examples. It should be noted, however, that this invention is not limited to these examples.

(Determination of absorption capacity and amount of water absorbed)

The absorption capacity of a given dewatering sheet and the amount of water absorbed by the sheet were determined by cutting a sample sheet 5 cm × 5 cm from the dewatering sheet, keeping the sample sheet immersed in 100 ml of purified water for one hour, subjecting the wet sample sheet to suction filtration, weighing the sample sheet after the filtration, and performing calculation of the following formulas using the result of weighing.

Absorption capacity (g/g) = Weight of the sheet after the filtration/weight of the sheet before immersion

Amount of water absorbed (g/m$^2$) = (weight of the sheet after the filtration/area of the sheet) - Basis weight of the substrate

(Measurement of ratio of exfoliation)

The ratio of exfoliation was determined by preparing 20 sample sheets 2 cm × 4 cm from a given dewatering sheet, placing the sample sheets in 1 liter of purified water, stirring the water holding the sample sheets therein for one hour, removing the sample sheets from the water, subjecting the wet sample sheets to suction filtration, weighing the filtrate, and performing calculation of the following formula using the result of weighing.

Radio of exfoliation (%) = (Weight of filtrate)/(Amount of water absorbed × 0.02 × 0.04 × 20) × 100

(Determination of ratio of formation of rust)

This determination was attained by causing a given dewatering sheet to stand in a hydrated state in oil together with a steel material and measuring the area ratio of the formation of rust on the surface of the steel material with the aid of the rating number standard diagram specified by Japanese Industrial Standard (JIS) H 8502.

Example 1

To the aqueous solution containing acrylamide as a monomer at a concentration of 34% by weight, 0.1 mol% of N,N'-methylenebisacrylamide (based on the acrylamide monomer), 0.3 g/mol of sodium persulfate (based on the acrylamide monomer), 0.2 g/mol of 2,2'-azo-bis(2-amidinopropane) dihydrochloride (based on the acrylamide monomer), and 1.5% by weight of hydroxyethyl cellulose (based on the acrylamide monomer) were added. Then, nitrogen gas was bubbled through the resultant solution to expel dissolved oxygen from the solution.

A non-woven fabric of polyethylene-polypropylene composite fibers having a basis weight of 25 g/m$^2$ was impregnated with the resultant aqueous monomer solution until the amount of the aqueous monomer solution deposited on the non-woven fabric totalled 100 g/m$^2$. The monomer deposited on the non-woven fabric was subsequently polymerized in an atmosphere of nitrogen at 120 °C to obtain a dewatering sheet (1) of this invention for the removal of water in oil.

The amount of water absorbed by this sheet was 340 g/m$^2$ and the ratio of exfoliation of polymer from this sheet was 0.74%.

Example 2

To the aqueous solution of a monomer consisting of 97 mol% of acrylamide and 3 mol% of sodium acrylate (monomer concentration 37% by weight), 0.1 mol% of N,N'-methylenebisacrylamide (based on the monomer), 0.5 g/mol of 2,2'-azo-bis(2-amidinopropane) dihydrochloride (based on the monomer), and 1.5% by weight of hydroxyethyl cellulose (based on the monomer) were added. Then, nitrogen gas was bubbled through the resultant solution to expel dissolved oxygen from the solution.

A non-woven fabric of polyester having a basis weight of 30 g/m$^2$ was impregnated with the aqueous monomer solution until the amount of the aqueous monomer solution deposited on the non-woven fabric totalled 205 g/m$^2$. The monomer in the non-woven fabric was subsequently polymerized in an atmosphere of nitrogen at 120 °C to obtain a dewatering sheet (2) of this invention for the removal of water in oil.

The amount of water absorbed by this sheet was 2400 g/m$^2$ and the ratio of exfoliation of the polymer from the sheet was 2.47%.

Example 3

The non-woven fabric of polyester fibers used in Example 2 was impregnated with the aqueous monomer solution obtained in Example 1 until the amount of the aqueous monomer solution deposited on the non-woven fabric totalled 240 g/m$^2$. The monomer in the non-woven fabric was subsequently polymerized in an atmosphere of nitrogen at 120 °C to obtain a dewatering sheet (3) of this invention for the removal of water in oil.

The amount of water absorbed by this sheet was 710 g/m$^2$ and the ratio of exfoliation of the monomer from the sheet was 0.04%.

Control 1

An aqueous 40 wt% monomer solution was prepared by dissolving in an aqueous partially neutralized sodium acrylate solution having 75% of the sodium acrylate thereof neutralized with sodium hydroxide, 2 mol% of N,N'-methylenebisacrylamide (based on the sodium acrylate monomer), 1.0 g/mol of sodium persulfate (based on the sodium acrylate monomer), and 1.5% by weight of hydroxyethyl cellulose (based on the sodium acrylate monomer). Then nitrogen gas was bubbled through the aqueous monomer solution to expel dissolved oxygen from the solution. The non-woven fabric used in Example 1 was impregnated with the aqueous monomer solution until the amount of the aqueous monomer solution deposited on the non-woven fabric totalled 50 g/m$^2$. The monomer in the non-woven fabric was subsequently polymerized in an atmosphere of nitrogen at 120 °C to obtain a dewatering sheet (1) for comparison.

The amount of water absorbed by this sheet was 240 g/m$^2$ and the ratio of exfoliation of the polymer from the sheet was 24%.

Control 2

An aqueous 40 wt% monomer solution was prepared by dissolving in an aqueous partially neutralized sodium acrylate solution having 75% of the sodium acrylate thereof neutralized with sodium hydroxide, 0.1 mol% of N,N'-methylenebisacrylamide (based on the sodium acrylate monomer), 1.0 g/mol of sodium persulfate (based on the sodium acrylate monomer), and 1.5% by weight of hydroxyethyl cellulose (based on the sodium acrylate monomer). Then nitrogen gas was bubbled through the aqueous monomer solution to expel dissolved oxygen from the solution. The non-woven fabric used in Example 1 was impregnated with the aqueous monomer solution until the amount of the aqueous monomer solution deposited on the non-woven fabric totalled 110 g/m$^2$. The monomer in the non-woven fabric was subsequently polymerized in an atmosphere of nitrogen at 120 °C to obtain a dewatering sheet (2) for comparison.

The amount of water absorbed by this sheet was 4800 g/m$^2$ and the ratio of exfoliation of the polymer from the sheet was 90%.

Example 4

A dewatering filter (1) was obtained by wrapping the dewatering sheet (1) for the removal of water in oil obtained in Example 1 in a total length of 10 m round a cylindrical tube of stainless steel provided in the lateral wall thereof with holes and measuring 25 cm in height and 4 cm in diameter. Through this dewatering filter (1), 200 liters of lubricating oil having a water content of 2000 ppm was circulated at a rate of 2 liters per minute to dewater the lubricating oil. The lubricating oil was passed from the outside to the inside of the filter.

After the filtration was continued for 4 hours, the lubricating oil was found to have a water content of 100 ppm. After the filtration was further continued for four more hours, the water content was still 100 ppm. When part of the lubricating oil was passed through a 0.2-μm filter, no gel of absorbent polymer was stopped by the filter. This fact indicates that no absorbent polymer exfoliated from the filter. From the filter so used for the removal of water from the lubricating oil, the dewatering sheet (1) of this invention was separated and tested for the absorption capacity on the outer side and the inner side of the sheet. The capacity was found invariably to be 150 g/m$^2$.

Example 5

A dewatering filter (2) was obtained by wrapping the dewatering sheet (2) for the removal of water in oil obtained in Example 2 in a total length of 10 m round a cylindrical tube of stainless steel provided in the lateral wall thereof with holes and measuring 25 cm in height and 4 cm in diameter. Through this dewatering filter (2), 200 liters of lubricating oil having a water content of 5000 ppm was circulated at a rate of 2 liters per minute to dewater the lubricating oil. The lubricating oil was passed from the outside to the inside of the filter.

After the filtration was continued for 4 hours, the lubricating oil was found to have a water content of 50 ppm. After the filtration was further continued for 4 more hours, the water content was still 50 ppm. When part of the lubricating oil was passed through a 0.2-μm filter, no gel of absorbent polymer was stopped by the filter. This fact indicates that no absorbent polymer exfoliated from the filter. From the filter so used for the removal of water from the lubricating oil, the dewatering sheet (2) of this invention was separated and tested for the absorption capacity on the outer side and the inner side of the sheet. The capacity was found invariably to be 400 g/m$^2$.

Example 6

The procedure of Example 5 for the removal of water from lubricating oil was faithfully repeated, except that the dewatering sheet (3) for the removal of water in oil obtained in Example 3 was used instead.

After the filtration was continued for 4 hours, the lubricating oil was found to have a water content of 80 ppm. After the filtration was further continued for 4 more hours, the water content was still 80 ppm. When part of the lubricating oil was passed through a 0.2-μm filter, no gel of absorbent polymer was stopped by the filter. This fact indicates that no absorbent polymer exfoliated from the filter. From the filter so used for the removal of water from the lubricating oil, the dewatering sheet (2) of this invention was separated and tested for the absorption capacity on the outer side and the inner side of the sheet. The capacity was found invariably to be 390 g/m$^2$.

Control 3

The procedure of Example 4 for the removal of water from lubricating oil was faithfully repeated, except that the dewatering sheet (1) for comparison for the removal of water from oil obtained in Control 1 was used instead.

After the filtration was continued for 4 hours, the lubricating oil was found to have a water content of 80 ppm. After the filtration was further continued for 4 more hours, the water content of the lubricating oil was 200 ppm. When part of the lubricating oil was passed through the filter, a hydrated gel of absorbent polymer was stopped by the filter.

Control 4

The procedure of Example 5 for the removal of water from lubricating oil was faithfully repeated, except that the dewatering sheet (2) for comparison for the removal of water from oil obtained in Control 1 was used instead.

After the dewatering treatment was continued for 1 hour, the pressure loss which was initially 0.5 kg/cm$^2$ was found to be 2 kg/cm$^2$. Thus, the circulation of the lubricating oil was stopped. The water content of the lubricating oil which was initially 5000 ppm was found to be 3500 ppm.

From the filter so used for the removal of water from the lubricating oil until the circulation was discontinued, the dewatering sheet (3) for comparison was separated and tested for the absorption capacity on the outer side and the inner side of the sheet. The amount of water absorbed on the outermost sheet was found to be 200 g/m$^2$ and that on the innermost sheet to be virtually none.

Example 7

In a glass vial containing 250 g of gasoline and 15 g of water, 10 sample sheets 5 cm × 5 cm cut from the dewatering sheet (3) were placed and test pieces 4 cm × 4 cm of soft steel were interposed one each between the adjacent sample sheets and they were kept under visual observation as to the progress of removal of water and the formation of rust on the surfaces of the soft steel test pieces.

During the first 2 hours' standing in the vial, the water was wholly absorbed by the samples of dewatering sheet (3). No rust was found to have formed in the meanwhile on the surfaces of the test pieces.

The standing was further continued at room temperature for 2 more months. During the standing, the sample sheets neither shed any gel of absorbent polymer nor expelled absorbed water and the test pieces gathered no rust.

Example 8

The procedure of Example 7 was repeated, except that four sample sheets of the dewatering sheet (2) for the removal of water in oil were used instead.

During the first two hours' standing, the water was wholly absorbed by the sample sheets. Spots of rust occurred on part of the surfaces of the test pieces. The area ratio of rust formation was 0.25%.

When the standing was further continued at room temperature for 2 more months, the sample sheets neither shed any gel of absorbent polymer nor expelled absorbed water and the area ratio of rust formation on the surfaces of the test pieces was still 0.25%.

Control 5

The procedure of Example 7 was repeated, except that two sample sheets of the dewatering sheet (2) for comparison for the removal of water in oil were used instead.

During the first 2 hours' standing, the sample sheets absorbed the water wholly and the test pieces gathered rust in red on their surfaces. The area ratio of rust formation was 5%.

When the standing was further continued at room temperature for 2 more months, rust was formed on the entire surfaces of the test pieces. The area ratio of rust formation was 25%. The sample sheets expelled part of the absorbed water. The water thus expelled stagnated on the bottom of the vial.

Control 6

The procedure of Example 7 was repeated, except that the vial contained test pieces but no sample sheet. The test pieces at once began to form rust and discolor in red. At the end of 2 hours' standing, the rust covered the entire surfaces of the test pieces.

Example 9

To the aqueous solution of a monomer containing 95 mol% of acrylamide and 5 mol% of sodium acrylate (monomer concentration 37% by weight), 0.1 mol% of N,N'-methylenebisacrylamide (based on the monomer), 0.5 g/mol of 2,2'-azo-bis(2-amidinopropane) dihydrochloride (based on the monomer), and 1.5% by weight of hydroxyethyl cellulose (based on the monomer) were added. Then, nitrogen gas was bubbled through the resultant solution to expel dissolved oxygen from the solution.

A non-woven fabric of polyester having a basis weight of 30 g/m$^2$ was impregnated with the aqueous monomer solution until the amount of the aqueous monomer solution deposited on the non-woven fabric totaled 205 g/m$^2$. The monomer in the non-woven fabric was subsequently polymerized in an atmosphere of nitrogen at 120 °C to obtain a dewatering sheet (4) of this invention for the removal of water in oil.

The absorption capacity of this dewatering sheet was 30 times its own volume. The amount of water absorbed by this sheet was 3150 g/m$^2$ and the ratio of exfoliation of the polymer from the sheet was 3.3%.

Example 10

To the aqueous solution of a monomer containing 90 mol% of acrylamide and 10 mol% of sodium acrylate (monomer concentration 37% by weight), 0.1 mol% of N,N'-methylenebisacrylamide (based on the monomer), 0.5 g/mol of 2,2'-azo-bis(2-amidinopropane) dihydrochloride (based on the monomer), and 1.5% by weight of hydroxyethyl cellulose (based on the monomer) were added. Then, nitrogen gas was bubbled through the resultant solution to expel dissolved oxygen from the solution.

A non-woven fabric of polyester having a basis weight of 30 g/m$^2$ was impregnated with the aqueous monomer solution until the amount of the aqueous monomer solution deposited on the non-woven fabric totalled 205 g/m$^2$. The monomer in the non-woven fabric was subsequently polymerized in an atmosphere of nitrogen at 120 °C to obtain a dewatering sheet (3) for comparison for the removal of water in oil.

The absorption capacity of this dewatering sheet was 50 times its own volume. The amount of water absorbed by this sheet was 5260 g/m$^2$ and the ratio of exfoliation of the polymer from the sheet was 15.0%.

Example 11

In a glass vial having an inner volume of 450 ml and containing 250 ml of gasoline 4 and 25 ml of water 5, a stack of sample sheets 1 of the dewatering sheet (2) obtained in Example 2, nets 3, and metal sheets 2 superposed in the order of sample sheet/net/metal sheet/net/sample sheet was submerged under the mixture of gasoline with water as illustrated in Fig. 1 and then kept under observation as to the absorption of the water 5 by the sample sheets 1 and the formation of rust on the metal sheets 2. The sample dewatering sheets measured 5 cm by 5 cm and they were used three each on the upper and the lower side in the stack. For the metal sheets (measuring 4 cm by 4 cm), a cold rolled steel sheet which is the standard test sheet specified by Japanese Industrial Standard (JIS) G3141 was used. The nets measured 5 cm by 5 cm. At the end of 45 days' standing, the metal sheets were found to have formed rust at an area ratio shown in Table 1.

Example 12

The procedure of Example 11 for the observation of rust formation was repeated, except that sample sheets (5 cm by 5 cm) of the dewatering sheet (4) obtained in Example 9 were used two each on the upper and the lower side in the stack instead. At the end of 45 days' standing, the metal sheets were found to have formed rust at an area ratio shown in Table 1.

Example 13

The procedure of Example 10 for the observation of rust formation was repeated, except that sample sheets (5 cm by 5 cm) of the dewatering sheet (5) for comparison obtained in Example 10 were used one each on the upper and the lower side in the stack instead. At the end of 45 days' standing, the metal sheets were found to have formed rust at an area ratio shown in Table 1.

Control 7

The procedure of Example 10 for the observation of rust formation was repeated, except that sample sheets (5 cm by 5 cm) of the dewatering sheet (3) for comparison obtained in Control 2 were used one each on the upper and the lower side in the stack instead. At the end of 45 days' standing, the metal sheets were found to have formed rust at an area ratio shown in Table 1.

## Table 1

| Dewateringsheet for water in oil | AAm/SA (mol ratio) | Absorption (g/g) | Exfoliation (%) | Area ratio of rust formation (%) |
|---|---|---|---|---|
| Sheet (2) | 97/3 | 23 | 2.5 | 0.1 |
| Sheet (4) | 95/5 | 30 | 3.3 | 0.5 |
| Sheet (5) | 90/10 | 50 | 15.0 | 2.0 |
| Sheet (2) for comparison | 0/100 | 70 | 90 | 10 |

Note 1) AAm: Acrylamide
2) SA: Sodium acrylate

The dewatering sheet of this invention for the removal of water in oil, when left standing in a hydrated state in gasoline in the presence of a steel material, causes no corrosion in the steel material. Thus, it can be advantageously used for the removal of water from a gasoline tank on an automobile, for example.

## Claims

1. A method for the removal of water in oil, which comprises contacting a water-absorbent polymer sheet with an oil containing water then removing water from the oil, wherein said water-absorbent polymer sheet comprises a water-absorbent polymer produced by the polymerization of a monomer containing a water-soluble nonionically unsaturated monomer and a hydrophobic fibrous substrate having said water-absorbent polymer directly deposited fast thereon.

2. A method according to claim 1, wherein said water-absorbent polymer is directly deposited fast on said hydrophobic fibrous substrate by polymerizing on said substrate a monomer containing a water-soluble nonionically unsaturated monomer.

3. A method according to claim 1 or 2, wherein said water-soluble nonionically unsaturated monomer is at least one member selected from the group consisting of acrylamide, methacrylamide, methoxy polyalkylene glycol (meth)acrylates, and hydroxy alkyl(meth)-acrylates.

4. A method according to claim 1 or 2, wherein said monomer further contains a water-soluble anionically unsaturated monomer.

5. A method according to claim 4, wherein said water-soluble anionically unsaturated monomer is at least one member selected from the group consisting of acrylic acid, methacrylic acid, 2-(meth)acrylamide-2-methylpropanesulfonic acids, (meth)acryloyl alkanesulfonic acids, and alkali metal salts or ammonium salts thereof.

6. A method according to any of claims 1 through 5, wherein said fibrous substrate contains fibers manifesting an advancing contact angle of 50° to 100 ° against water.

7. A water-absorbent polymer sheet comprising a water-absorbent polymer produced by the polymerization of a monomer containing from 96 to 99.9 mol% of a water-soluble nonionically unsaturated monomer and from 0.1 to 4 mol% of a water-soluble anionically unsaturated monomer and a hydrophobic fibrous substrate having said water-absorbent polymer directly deposited fast thereon.

8. A method for the production of a water-absorbent polymer sheet, which comprises applying the aqueous solution of a monomer containing from 96 to 99.9 mol% of a water-soluble nonionically unsaturated monomer and from 0.1 to 4 mol% of a water-soluble anionically unsaturated monomer to a hydrophobic substrate and then polymerizing said monomer.

9. A dewatering sheet for the removal of water in oil having an absorbent polymer directly deposited fast on a hydrophobic fibrous substrate, which dewatering sheet suffers the absorbent polymer, when swelled with purified water, to exfoliate from the substrate at a ratio of not more than 8% by weight and suffers the hydrated sheet, when left standing in oil in the presence of a steel material, to generate rust on the surface of the steel material at an area ratio of not more than 1%.

# FIGURE

EP 0 669 152 A1

**European Patent Office**

# EUROPEAN SEARCH REPORT

Application Number

EP 95 30 0834

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 011 no. 124 (C-416) ,17 April 1987 & JP-A-61 263638 (MITSUI TOATSU CHEM INC) 21 November 1986, | 1,3,7 | B01D17/022 C08F20/56 B01J20/26 B01D17/02 |
| A | * abstract * | 4,5 | |
| A | WO-A-93 22025 (HYDRA TECH HYDRAULICS INC ;CULBERT ROBERT M (US); PARKER STEVEN C) 11 November 1993 * page 7, line 25 - line 32; claims 8-12 * * page 10, line 30 - line 36 * | 1-3,7 | |
| A | PATENT ABSTRACTS OF JAPAN vol. 011 no. 124 (C-416) ,17 April 1987 & JP-A-61 263609 (MITSUI TOATSU CHEM INC) 21 November 1986, * abstract * | 1,3-5 | |
| A | US-A-4 787 949 (COLE FREDERIC W ET AL) 29 November 1988 * column 2, line 11 - line 19 * * column 3, line 1 - line 18 * | 7,9 | |
| A | US-A-4 861 469 (ROSSI JAMES L ET AL) 29 August 1989 * column 2, line 50 - line 62 * | 1-5 | TECHNICAL FIELDS SEARCHED (Int.Cl.6) B01D C08F B01J C10G |

The present search report has been drawn up for all claims

| Place of search | Date of completion of the search | Examiner |
|---|---|---|
| THE HAGUE | 30 June 1995 | Kaspers, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14